(19) Europäisches Patentamt
European Patent Office
Office européen des brevets

(11) EP 3 144 755 A1

(12) EUROPÄISCHE PATENTANMELDUNG

(43) Veröffentlichungstag:
22.03.2017 Patentblatt 2017/12

(51) Int Cl.:
G05B 19/4065 (2006.01)

(21) Anmeldenummer: 15186094.7

(22) Anmeldetag: 21.09.2015

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME
Benannte Validierungsstaaten:
MA

(71) Anmelder: Siemens Aktiengesellschaft
80333 München (DE)

(72) Erfinder:
• Pitz, Thomas
71263 Weil der Stadt (DE)
• Spielmann, Ralf
70569 Stuttgart (DE)

(54) AUTOMATISCHER WERKZEUGWECHSEL BEI EINER NUMERISCH GESTEUERTEN WERKZEUGMASCHINE

(57) Bei der Bearbeitung eines Werkstücks (2) mittels eines Werkzeugs (3) in einer numerisch gesteuerten Werkzeugmaschine (1) sollen fehlerhaft bearbeitete Werkstücke (2) bzw. unreparierbar verschlissene Werkzeuge (3) vermieden werden.

Hierfür wird eine numerische Steuerung (14) für eine Werkzeugmaschine (1) zur automatischen Bearbeitung wenigstens eines Werkstücks (2) mittels eines Werkzeugs (3) mit folgenden Merkmalen vorgeschlagen:
- Mittel zum Erfassen des Erreichens einer Verschleißgrenze des Werkzeugs (3),
- Mittel zum Erkennen des Eingriffs des Werkzeugs (3) in das Werkstück (2),
- Mittel zum automatischen Einleiten eines Werkzeugwechsels in einer Phase des automatischen Bearbeitungsvorganges, in der die Verschleißgrenze des Werkzeugs (3) erreicht ist und das Werkzeug (3) nicht mit dem Werkstück (2) in Eingriff steht.

Demnach wird ein automatischer Werkzeugwechsel an "strategisch günstigen Stellen" ausgeführt, um das Werkzeug (3) möglichst lange nutzen zu können, aber das Werkzeug (3) auszuwechseln, bevor es Schaden anrichten kann. Ein automatischer Werkzeugwechsel erfolgt genau dann, wenn das Werkzeug (3) verschlissen ist und sich bei der Bearbeitung Werkzeug (3) und Werkstück (2) nicht berühren, das Werkzeug (3) also gerade nicht in Eingriff steht.

FIG 1

**Beschreibung**

Die Erfindung betrifft eine numerische Steuerung für eine Werkzeugmaschine zur automatischen Bearbeitung wenigstens eines Werkstücks mittels eines Werkzeugs. Ferner betrifft die Erfindung ein Verfahren zum Betrieb einer numerischen Steuerung.

An numerische Steuerungen für industrielle Maschinen (Werkzeugmaschinen, Produktionsmaschinen, Roboter etc.) werden hohe Anforderungen gestellt. Beispielsweise müssen bei der Produktion von Werkstücken mit Hilfe von numerisch gesteuerten Werkzeugmaschinen Werkstücke mit einer definierten Qualität in möglichst kurzer Zeit produziert werden. Stillstandszeiten durch den Austausch verschlissener Werkzeuge müssen möglichst gering gehalten werden und auch die Qualität des Werkstücks darf nicht infolge von Werkzeugwechseln reduziert werden.

Große Werkstücke werden gewöhnlich auf großen Werkzeugmaschinen bearbeitet. Das Werkzeug wächst jedoch nicht immer linear zur Werkstückgröße. Irgendwann ist beim Werkzeug eine Größe erreicht, bei der das Werkzeug-Handling gerade noch zumutbar ist (z.B. Werkzeugaufnahme HSK125, die ohne Werkzeug schon 15kg wiegt). Man kann die Größe der verwendeten Werkzeuge daher nicht beliebig steigern. Bei größeren Werkstücken bzw. größeren Werkzeugmaschinen muss dementsprechend einfach länger bearbeitet werden. Dadurch ergeben sich längere Werkzeugwege unter Spaneingriff. Dabei kann es vorkommen, dass eine einzige Bearbeitung 20 Stunden lang dauert, einzig dem Weg geschuldet den das Werkzeug zurücklegen muss.

Es gibt Werkstoffe, die einfach (im Sinne der Wirtschaftlichkeit) zu zerspanen sind. Als Beispiel sei der Werkstoff Aluminium genannt. Diesen mit einem passenden Werkzeug zu zerspanen (z.B. Hartmetallfräser D=10 mm, 4-Schneider) erlaubt Vorschubgeschwindigkeiten bis zu 10200 mm/min. Eine Bearbeitung geht bei solchen Materialpaarungen meist beeindruckend schnell von statten.

Mit folgender Formel kann die zulässige Vorschubgeschwindigkeit berechnet werden:

$$vf = \frac{vc \cdot 1000}{d \cdot \pi} \cdot z \cdot fz$$

vf = Vorschubgeschwindigkeit in mm/min
vc = Schnittgeschwindigkeit in m/min
d = Fräserdurchmesser in mm
z = Anzahl der Schneiden am Fräser
fz = Zahnvorschub in mm/Zahn

Setzt man die Daten des oben genannten Hartmetallfräsers ein, so erhält man beispielsweise zur Bearbeitung von Aluminium folgenden Vorschub:

$$vf = \frac{800 \cdot 1000}{10 \cdot \pi} \cdot 4 \cdot 0{,}1 = 10191$$

Ebenso gibt es Material-Paarungen (Werkzeug zu Werkstück) die vom wirtschaftlichen Standpunkt aus eher ungünstig sind, aber trotzdem gefertigt werden müssen. Als Beispiel seien die sog. Superlegierungen genannt, vielleicht besser bekannt als Inconel- oder Rene-Werkstoffe. Diese Werkstoffe werden in den Bereichen Gas- oder Flugzeugturbinen verwendet. Solche Werkstoffe mit gleichen Fräserdimensionen zu zerspannen bedeutet Vorschubgeschwindigkeiten von 500 mm/min, also um einen Faktor 20 langsamer als bei der oben erwähnten Aluminiumbearbeitung.

Beispielsweise ergibt sich hier materialbedingt eine geänderte Schnittgeschwindigkeit wie folgt:

$$vf = \frac{40 \cdot 1000}{10 \cdot \pi} \cdot 4 \cdot 0{,}1 = 500$$

Werkzeuge werden in Werkzeugmaschinen durch die Werkzeugmaschinensteuerung auf ihre Funktionsfähigkeit überwacht, sei es pauschal über ein Zurückzählen der noch verfügbaren Einsatzzeit oder ein inkrementieren der gefertigten Werkstücke oder eine Überprüfung der Verschleißdaten durch entsprechende Messungen oder über eine Onlineüberwachung der Schnittkräfte.

Wenn mindestens ein Kriterium erfüllt ist kann die Steuerung das Werkzeug als verbraucht definieren und das aktive Werkzeug auf "gesperrt" setzen. Wenn der Zustand eines Werkzeugs auf gesperrt gesetzt ist, kann es - nachdem es nach einer Verwendung in das Werkzeugmagazin transportiert wurde - nicht automatisch wieder verwendet werden. Das bedeutet aber, dass erst beim nächsten Bedarf dieses Werkzeugs das Werkzeug nicht mehr eingewechselt wird. Für die aktuelle Bearbeitung wird weiterhin das aktuelle Werkzeug verwendet, obwohl dieses als verschlissen gemeldet wurde. Diese Bearbeitung kann unter Umständen noch mehrere Stunden dauern, da entweder das Werkstück sehr groß ist, das Werkzeug sehr klein ist oder die technologischen Daten wie Vorschub, Zustellung, etc. sehr klein sind.

Durch die noch ggf. sehr lange Verwendung dieses verschlissenen Werkzeugs kann es im ungünstigsten Fall zur fehlerhaften Bearbeitung des Werkstückes kommen, das dann Ausschuss bedeutet. Im Bereich Aerospace können Rohteile 100.000 € und mehr kosten. Verschlissene Werkzeuge, z.B. Fräswerkzeuge, können wieder verwendet werden, nachdem sie wieder geschärft wurden. Das hat auch wirtschaftliche Gründe, denn ein Werkzeug kann bis zu mehreren tausend Euro kosten. Durch die ggf. noch sehr lange Weiterverwendung dieses bereits verschlissenen Werkzeugs kann das Werkzeug so verschlissen werden, dass es nicht mehr geschärft werden kann.

Um diesem Problem zu entgegnen sind folgende Lösungen denkbar:

- Es werden nur Werkzeuge verwenden, die von der Standzeit her immer für die komplette Bearbeitung ausreichen, sofern es solche Werkzeuge gibt.
- Es werden pauschale Werkzeugwechsel in den jeweiligen Bearbeitungen vorgesehen.
- Die jeweiligen Bearbeitungen werden so kurz gehalten, dass diese immer ohne Werkzeugwechsel fertig gestellt werden können.

Alle diese Lösungen werden heute schon verwendet. Jedoch sind diese Lösungen ein Kompromiss zwischen technischer Machbarkeit und Wirtschaftlichkeit. Werkzeuge für Bearbeitungen auf Werkzeugmaschinen verursachen einen nicht unerheblichen Teil an Kosten in der Produktion. So kann es sein, dass aufgrund ungünstiger Material-Paarungen (Werkzeug zu Werkstückmaterial) bestimmte Werkzeuge in einer Dimension mehrfach in einer Werkzeugmaschine vorgehalten werden müssen. Dann gibt es Werkzeuge für unterschiedliche Bearbeitungsarten auf einer Werkzeugmaschine, z.B. Werkzeuge zum Schruppen (Vorbearbeitung) und Werkzeuge zum Schlichten (Fertigbearbeitung). Mitunter muss so eine Vielzahl an Werkzeugen in einer Werkzeugmaschine zur Bearbeitung eines Werkstücks vorgehalten werden. Da Werkzeugmaschinen nur wirtschaftlich sind, wenn diese Späne abheben, sollten die Werkzeuge so lange wie möglich im Eingriff sein. Jeder unnötige Werkzeugwechsel schadet der Bearbeitungszeit. Von pauschalen Werkzeugwechseln ist also eher abzusehen. Wenn die Werkstücke jedoch eine gewisse Dimension haben, dauert die Bearbeitung aus technologischen Gründen eine gewisse Zeit. Nicht immer sind Werkzeuge mit einer entsprechenden Standzeit verfügbar. Werkzeugwechsel sind daher für bestimmte Bearbeitungsvorgänge zwingend erforderlich.

Aus der EP 2103378 A1 ist eine Bearbeitungsmaschine zur automatisierten Serienbearbeitung von Werkstücken mittels eines Werkzeugs bekannt, wobei der Verschleiß des Werkzeugs durch eine Messung des Ist-Temperaturwerts des Werkstücks mittels eines Rechners ermittelt wird und bei der Überschreitung eines Referenzwertes ein Warnhinweis bzw. ein automatischer Wechsel des Werkzeugs ausgelöst wird.

Der Erfindung liegt die Aufgabe zugrunde, fehlerhaft bearbeitete Werkstücke bzw. unreparierbar verschlissene Werkzeuge zu vermeiden.

Diese Aufgabe wird gelöst durch eine numerische Steuerung für eine Werkzeugmaschine zur automatischen Bearbeitung wenigstens eines Werkstücks mittels eines Werkzeugs, umfassend

- Mittel zum Erfassen des Erreichens einer Verschleißgrenze des Werkzeugs,
- Mittel zum Erkennen des Eingriffs des Werkzeugs in das Werkstück,

- Mittel zum automatischen Einleiten eines Werkzeugwechsels in einer Phase des automatischen Bearbeitungsvorganges, in der die Verschleißgrenze des Werkzeugs erreicht ist und das Werkzeug nicht mit dem Werkstück in Eingriff steht.

Ferner wird die Aufgabe gelöst durch ein Verfahren zum Betrieb einer numerischen Steuerung für eine Werkzeugmaschine zur automatischen Bearbeitung wenigstens eines Werkstücks mittels eines Werkzeugs mit folgenden Schritten:

- Erfassen des Erreichens einer Verschleißgrenze des Werkzeugs,
- Erkennen des Eingriffs des Werkzeugs in das Werkstück,
- automatisches Einleiten eines Werkzeugwechsels in einer Phase des automatischen Bearbeitungsvorganges, in der die Verschleißgrenze des Werkzeugs erreicht ist und das Werkzeug nicht mit dem Werkstück in Eingriff steht.

Die Grundidee der Erfindung liegt darin, einen Werkzeugwechsel - insbesondere bei langen Bearbeitungszeiten - an "strategisch günstigen Stellen" möglichst automatisch auszuführen, um das Werkzeug möglichst lange nutzen zu können, aber das Werkzeug auszuwechseln, bevor ein Schaden entsteht. Ein automatischer Werkzeugwechsel sollte genau dann erfolgen, wenn das Werkzeug verschlissen ist und sich bei der Bearbeitung Werkzeug und Werkstück nicht berühren, das Werkzeug also gerade nicht in Eingriff steht.

Durch das Einführen einer entsprechenden, neuen Steuerungsfunktionalität können die eingangs genannten Probleme sowohl technisch als auch wirtschaftlich gelöst werden. Die Erfindung eignet sich zur einfachen technischen und wirtschaftlichen Verwendung von Werkzeugen in numerisch gesteuerten Werkzeugmaschinen. Es ist ein neuer und innovativer Ansatz, automatisch die maximale Werkzeugeinsatzzeit auszunutzen.

Bei vorteilhaften Ausführungsformen der Erfindung wird das Erreichen der Verschleißgrenze anhand einer Einsatzzeit und/oder einer Anzahl gefertigter Werkstücke und/oder einer Überwachung der Schnittkräfte und/oder einer Überwachung der Werkstücktemperatur und/oder einer Überwachung der Werkzeugtemperatur erkannt.

Weiterhin wird während der Abarbeitung eines Teileprogrammes anhand der Ausführung einer Eilgang-Bewegung erkannt, dass das Werkzeug nicht mit dem Werkstück in Eingriff steht.

Darüber hinaus kann die Situation während der Bearbeitung des Werkstücks, in der das Werkzeug nicht mit dem Werkstück in Eingriff steht, auch dadurch eine Überwachung der Schnittkräfte erkannt werden.

Bei dem erfindungsgemäßen Verfahren bzw. der erfindungsgemäßen numerischen Steuerung wird vorteilhaft ein verschlissenes Werkzeug ohne expliziten Werkzeugwechselbefehl (in dem ausgeführten Teileprogramm) automatisch ersetzt.

Bei einer bevorzugten Ausführungsform der Erfindung wird ein Werkzeug durch ein gleiches Werkzeug (z .B. vorhandenes Schwesterwerkzeug) automatisch ohne expliziten Werkzeugwechselbefehl ersetzt, wenn folgende drei Kriterien gleichzeitig vorliegen:

- Das Erreichen der Verschleißgrenze des Werkzeugs wurde erfasst,
- es wird gerade eine Eilgang-Bewegung durchgeführt
- und es wird (zur Sicherheit) zusätzlich festgestellt, dass die Spindel gerade keine Schnittkräfte erfährt.

Insbesondere wenn diese drei Kriterien gleichzeitig vorliegen handelt es sich um einen besonders vorteilhaften Zeitpunkt bzw. Zeitraum für einen anstehenden Werkzeugwechsel, bei dem das Werkzeug automatisch und ohne expliziten Werkzeugwechselbefehl ersetzt werden kann.

Mit dem erfindungsgemäßen Verfahren wird die Werkzeugstandzeit, d.h. die Zeit in der man mit dem Werkzeug ohne Unterbrechung arbeiten kann, im Gegensatz zu heutigen Lösungen optimal wirtschaftlich ausgenutzt. Unter Einbeziehung der genannten Überwachungsfunktionen kann sehr leicht ein intelligenter Werkzeugwechsel durch die Steuerung konfiguriert werden.

Eine Weiterbildung der Erfindung umfasst Mittel zum Erkennen einer voraussichtlichen Dauer zwischen dem Erreichen der Verschleißgrenze und dem darauffolgenden Zeitpunkt, zu dem das Werkzeug nicht mit dem Werkstück in Eingriff steht. Dadurch kann vorausbestimmt werden, wann der nächste erfindungsgemäße Werkzeugwechsel stattfinden würde. Überschreitet diese (voraussichtliche) Dauer eine vorbestimmte bzw. vorbestimmbare Maximaldauer, so besteht die Gefahr, dass das Werkzeug bis zum Erreichen des Zeitpunktes, in dem das Werkzeug nicht mit dem Werkstück in Eingriff stehen würde, Schaden nehmen könnte. In diesem Fall sollte daher von dem erfindungsgemäßen Verfahren abgewichen werden, derart, dass der Werkzeugwechsel bereits durchgeführt wird bevor das Werkzeug nicht mehr mit dem Werkstück in Eingriff steht. Diese Vorgehensweise ist als Vorsichtsmaßnahme zu verstehen, um eine mögliche Beschädigung des Werkzeugs oder des Werkstücks zu vermeiden.

Die Erfindung wird nachfolgend anhand von Ausführungsbeispielen näher erläutert. Dabei zeigen:

FIG 1    eine numerisch gesteuerte Werkzeugmaschine und

FIG 2    veranschaulicht Verfahrensschritte bei der Durchführung eines erfindungsgemäßen Verfahrens.

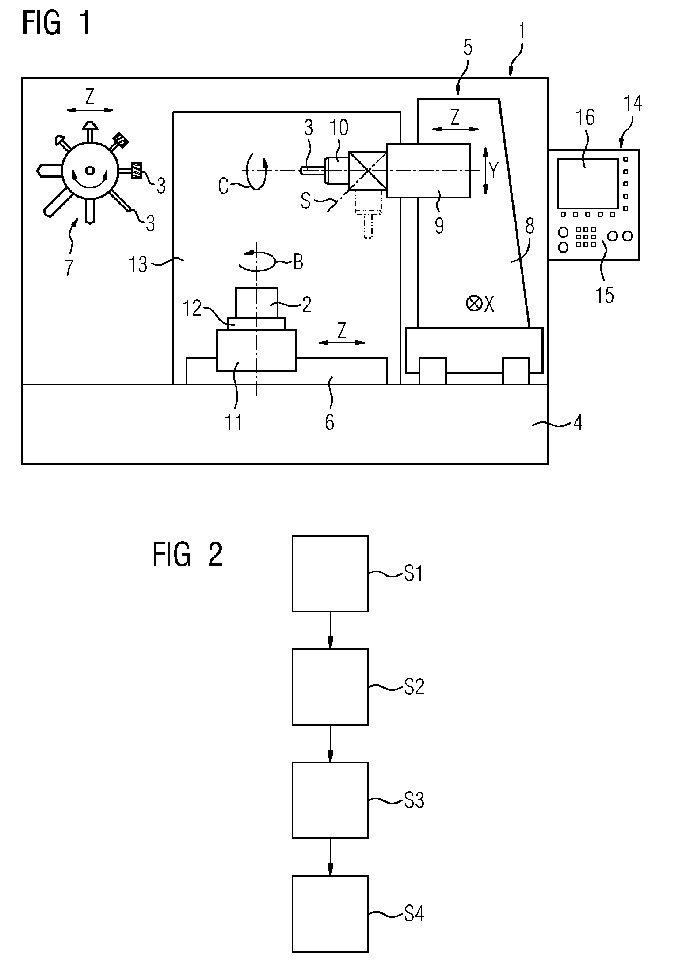

Figur 1 zeigt in schematischer Darstellung eine erfindungsgemäße Werkzeugmaschine in Form eines Bearbeitungszentrums 1 zur 5-achsigen Bearbeitung eines Werkstücks 2 durch wenigstens ein Werkzeug 3. Auf einem Maschinengestell 4 sind dazu eine Werkzeugbewegungseinheit 5 sowie eine Werkstückbewegungseinheit 6 angeordnet. Die Werkzeugbewegungseinheit 5 umfasst einen längs der Achse X beweglichen Ständer 8 und einen darauf längs der Achsen Y und Z beweglich angebrachten Schlitten 9, welcher eine Spindel 10 trägt. Die Spindel 10 ist um die Achse C rotierend antreibbar und zur Aufnahme eines Werkzeugs 3 vorgesehen. Die Spindel 10 ist zudem um eine Achse S schwenkbar gelagert, wobei beim Schwenken die Spindelachse C eine Bewegung auf einem Kegelmantel beschreibt. Der Winkel zwischen der Spindelachse C und der Schwenkachse S beträgt 45°, woraus sich ein Kegelwinkel von 90° ergibt. Durch diese Anordnung kann die Spindel 10 zwischen einer horizontalen und einer vertikalen Extremstellung beliebige Neigungswinkel einnehmen.

Die Werkstückbewegungseinheit 6 umfasst einen längs der Achse Z beweglichen Schlitten 11, der einen um die Achse B rotierend antreibbaren Werkstücktisch 12 trägt und zur Aufnahme eines Werkstücks 2 mit entsprechenden Befestigungs- und Spannmitteln (nicht dargestellt) versehen ist.

Zur Steuerung des Bearbeitungszentrums 1 ist eine CNC-Steuerung 14 vorhanden. Die CNC-Steuerung 14 führt eine Steuerfunktion durch Abarbeitung eines Teileprogrammes in Echtzeit aus und steuert dadurch die Relativbewegung zwischen Werkzeug 3 und Werkstück 2 in Echtzeit. Hierbei werden von der Steuerung laufend Eingangsdaten bzw. Eingangssignale ("Istwerte") der Werkzeugmaschine 1 erfasst und die CNC-Steuerung 14 erzeugt unter Einbeziehung dieser Istwerte Ausgangssignale in Form von Steuerbefehlen für die Antriebe (nicht dargestellt) der Werkzeugmaschine 1.

Die CNC-Steuerung 14 weist unter anderem als wesentliche Komponenten einen Echtzeitkern NCK (Numerical Control Kernel), eine PLC (Programmable Logic Control) sowie eine HMI-Einheit 15 (Human-Machine-Interface) mit einem Display 16 auf.

Das Bearbeitungszentrum 1 ermöglicht die Durchführung von Bearbeitungsprozessen durch spanende Formgebung mit geometrisch bestimmter Schneide wie zum Beispiel Fräsen, Drehen, Bohren, Gewindeschneiden, Drehfräsen, Honen usw., aber auch Bearbeitungsprozesse mit geometrisch unbestimmter Schneide wie zum Beispiel Schleifen. Ferner können spanlose Fertigungsverfahren wie etwa Rollieren oder Gewindeformen durchgeführt werden. Die Erzeugung einer gewünschten Werkstückform erfolgt innerhalb des Arbeitsraums 13 durch eine Abfolge verschiedener Bearbeitungsprozesse, zu welcher Werkzeuge 3 mit dem Werkstück 2 relativ zueinander Längs programmierter Bahnen bewegt und miteinander in Eingriff gebracht werden. Die zur Ausführung der Bearbeitungsprozesse benötigten Werkzeuge 3 werden in einem Werkzeugmagazin 7 vorgehalten und entsprechend der Bearbeitungsabfolge nacheinander mittels einer Werkzeugwechseleinrichtung (nicht dargestellt) in die Spindel 10 eingewechselt.

Mit dem dargestellten Bearbeitungszentrum 1 lassen sich 5-Achs-Bearbeitungen durchführen, die beispielsweise beim Fräsen von Freiformflächen - etwa beim Fräsen von Turbinenschaufeln - erforderlich sind.

Erfindungsgemäß ist die Steuerung 14 dazu ausgebildet, das Erreichen einer Verschleißgrenze des Werkzeugs 3 zu erfassen. Hierfür können in der Steuerung 14 die Einsatzzeit des Werkzeuges 3, die Anzahl der mit dem Werkzeug 3 gefertigten Werkstücke, die Schnittkräfte bei der Bearbeitung des Werkstücks 2, die Werkstücktemperatur oder die Werkzeugtemperatur erfasst und in der Steuerung 14 ausgewertet werden. Vorzugsweise werden gleichzeitig mehrere der genannten Parameter für die Beurteilung des Verschleißzustandes des Werkzeugs 3 herangezogen. Weiterhin erkennt die Steuerung 14, ob sich das Werkzeug 3 gerade in Eingriff mit dem Werkstück 2 befindet. Stellt die Steuerung 14 demnach fest, dass sowohl die Verschleißgrenze erreicht ist als auch das Werkzeug nicht in Eingriff mit dem Werkstück steht, so leitet die Steuerung 14 automatisch einen Werkzeugwechsel ein. Dadurch kann eine möglichst lange Bearbeitungszeit mit dem Werkzeug 3 erreicht werden und die Qualität des Werkstücks 2 wird durch die Durchführung des Werkzeugwechsels an einer "strategisch günstigen Stelle" nicht negativ beeinflusst.

Die Steuerung 14 erkennt insbesondere bei der Abarbeitung eines Teileprogrammes anhand der Ausführung einer Eilgang-Bewegung, dass das Werkzeug nicht mit dem Werkstück in Eingriff steht. Zusätzlich oder alternativ kann die Situation während der Bearbeitung des Werkstücks 2, in der das Werkzeug 3 nicht mit dem Werkstück 2 in Eingriff steht, auch dadurch bestimmt werden, dass die Schnittkräfte überwacht werden. Hierfür kann die Werkzeugmaschine 1 mit entsprechenden Sensoren ausgestattet sein oder die Schnittkräfte werden durch eine Auswertung der Stromaufnahme der betreffenden Antriebe für die Werkzeugmaschine 1 bestimmt.

Gemäß der Erfindung wechselt die numerische Steuerung 14 vorteilhaft ein verschlissenes Werkzeug automatisch und ohne expliziten Werkzeugwechselbefehl in dem ausgeführten Teileprogramm gegen ein gleichartiges (Schwester-) Werkzeug aus.

Bei einer vorteilhaften Ausführungsform der Steuerung 14 umfasst diese Mittel zum Erkennen einer voraussichtlichen Dauer zwischen dem Erreichen der Verschleißgrenze und dem darauffolgenden Zeitpunkt, zu dem das Werkzeug 3 nicht mit dem Werkstück 2 in Eingriff steht, beispielsweise in Form einer sogenannten Look-Ahead-Funktion. Dadurch kann vorausbestimmt werden, wann der nächste erfindungsgemäße Werkzeugwechsel stattfinden würde. Überschreitet diese (voraussichtliche) Dauer eine vorbestimmte bzw. vorbestimmbare Maximaldauer, so besteht die Gefahr, dass das Werkzeug 3 bis zum Erreichen des Zeitpunktes, in dem das Werkzeug 3 nicht mit dem Werkstück 2 in Eingriff stehen würde, Schaden nehmen könnte. In diesem Fall sollte daher von dem erfindungsgemäßen Verfahren abgewichen werden, derart, dass der Werkzeugwechsel bereits durchgeführt wird bevor das Werkzeug 3 nicht mehr mit dem Werkstück 2 in Eingriff steht. Diese Vorgehensweise ist als Vorsichtsmaßnahme zu verstehen, um eine mögliche Beschädigung des Werkzeugs 3 oder des Werkstücks 2, beispielsweise durch Werkzeugbruch, zu vermeiden.

Figur 2 veranschaulicht ein Ausführungsbeispiel zur Durchführung eines erfindungsgemäßen Verfahrens. Dabei wird in einem ersten Verfahrensschritt S1 festgestellt, ob eine Verschleißgrenze bei dem gerade verwendeten Werkzeug erreicht ist. In einem zweiten Verfahrensschritt S2 wird geprüft, ob eine Eilgang-Bewegung (Verfahrbewegung) ausgeführt wird, beispielsweise in Folge einer entsprechenden G-Code-Anweisung in dem aktuell ausgeführten Teileprogramm. Treffen beide oben genannten Bedingungen zu, das heißt es ist sowohl die Verschleißgrenze erreicht und zusätzlich wird gerade eine Eilgang-Bewegung ausgeführt, dann wird sicherheitshalber in einem Verfahrensschritt S3 zusätzlich geprüft, ob die Spindel aktuell eine Last durch Schnittkräfte erfährt. Ist dies nicht der Fall, so wird ein Werkzeugwechsel veranlasst (Verfahrensschritt S4).

## Patentansprüche

1. Numerische Steuerung (14) für eine Werkzeugmaschine (1) zur automatischen Bearbeitung wenigstens eines Werkstücks (2) mittels eines Werkzeugs (3), umfassend

   - Mittel zum Erfassen des Erreichens einer Verschleißgrenze des Werkzeugs (3),
   - Mittel zum Erkennen des Eingriffs des Werkzeugs (3) in das Werkstück (2),
   - Mittel zum automatischen Einleiten eines Werkzeugwechsels in einer Phase des automatischen Bearbeitungsvorganges, in der die Verschleißgrenze des Werkzeugs (3) erreicht ist und das Werkzeug (3) nicht mit dem Werkstück (2) in Eingriff steht.

2. Numerische Steuerung (14) nach Anspruch 1, wobei das Erreichen der Verschleißgrenze anhand einer Einsatzzeit und/oder einer Anzahl gefertigter Werkstücke (2) und/oder einer Überwachung der Schnittkräfte und/oder einer Überwachung der Werkstücktemperatur und/oder einer Überwachung der Werkzeugtemperatur erkennbar ist.

3. Numerische Steuerung (14) nach Anspruch 1 oder 2, wobei anhand der Ausführung einer Eilgang-Bewegung erkennbar ist, dass das Werkzeug (3) nicht mit dem Werkstück (2) in Eingriff steht.

**4.** Numerische Steuerung (14) nach einem der vorherigen Ansprüche, wobei durch eine bzw. die Überwachung der Schnittkräfte erkennbar ist, dass das Werkzeug (3) nicht mit dem Werkstück (2) in Eingriff steht.

**5.** Numerische Steuerung (14) nach einem der vorherigen Ansprüche, wobei ein verschlissenes Werkzeug (3) ohne expliziten Werkzeugwechselbefehl automatisch ersetzbar ist.

**6.** Numerische Steuerung (14) nach einem der vorherigen Ansprüche, umfassend Mittel zum Erkennen einer voraussichtlichen Dauer zwischen dem Erreichen der Verschleißgrenze und dem darauffolgenden Zeitpunkt, zu dem das Werkzeug (3) nicht mit dem Werkstück (2) in Eingriff steht.

**7.** Verfahren zum Betrieb einer numerischen Steuerung (14) für eine Werkzeugmaschine (1) zur automatischen Bearbeitung wenigstens eines Werkstücks (2) mittels eines Werkzeugs (3) mit folgenden Schritten:

- Erfassen des Erreichens einer Verschleißgrenze des Werkzeugs (3),
- Erkennen des Eingriffs des Werkzeugs (3) in das Werkstück (2),
- automatisches Einleiten eines Werkzeugwechsels in einer Phase des automatischen Bearbeitungsvorganges, in der die Verschleißgrenze des Werkzeugs (3) erreicht ist und das Werkzeug (3) nicht mit dem Werkstück (2) in Eingriff steht.

**8.** Verfahren nach Anspruch 7, wobei das Erreichen der Verschleißgrenze anhand einer Einsatzzeit und/oder einer Anzahl gefertigter Werkstücke (2) und/oder einer Überwachung der Schnittkräfte und/oder einer Überwachung der Werkstücktemperatur und/oder einer Überwachung der Werkzeugtemperatur erkannt wird.

**9.** Verfahren nach Anspruch 7 oder 8, wobei anhand der Ausführung einer Eilgang-Bewegung erkennbar ist, dass das Werkzeug (3) nicht mit dem Werkstück (2) in Eingriff steht.

**10.** Verfahren nach einem der Ansprüche 7 bis 9, wobei durch eine bzw. die Überwachung der Schnittkräfte erkennbar ist, dass das Werkzeug (3) nicht mit dem Werkstück (2) in Eingriff steht.

**11.** Verfahren nach einem der Ansprüche 7 bis 10, wobei ein verschlissenes Werkzeug (3) ohne expliziten Werkzeugwechselbefehl automatisch ersetzbar ist.

**12.** Verfahren nach einem der Ansprüche 7 bis 11, umfassend Mittel zum Erkennen einer voraussichtlichen Dauer zwischen dem Erreichen der Verschleißgrenze und dem darauffolgenden Zeitpunkt, zu dem das Werkzeug (3) nicht mit dem Werkstück (2) in Eingriff steht.

**13.** Werkzeugmaschine (1) mit einer numerischen Steuerung (14) nach einem der Ansprüche 1 bis 6.

FIG 1

FIG 2

**Europäisches Patentamt**

**European Patent Office**

**Office européen des brevets**

# EUROPÄISCHER RECHERCHENBERICHT

Nummer der Anmeldung

EP 15 18 6094

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 723 219 A (BEYER PETER J [US] ET AL) 2. Februar 1988 (1988-02-02) * Zusammenfassung * * Abbildungen 1,4,5 * * Spalte 8, Zeile 8 - Spalte 9, Zeile 60 * * Spalte 16, Zeile 23 - Spalte 17, Zeile 49 * | 1-13 | INV. G05B19/4065 |
| A | JP S61 178155 A (YAMAZAKI MAZAK CORP) 9. August 1986 (1986-08-09) * Zusammenfassung * * Abbildung 1 * | 1-13 | |
| A | GIAMPAOLO D'ERRICO ED - INSTITUTE OF ELECTRICAL AND ELECTRONICS ENGINEERS: "TOOL CONDITION MONITORING AND MACHINING PROCESS CONTROL", PROCEEDINGS OF THE ANNUAL CONFERENCE OF THE INDUSTRIAL ELECTRONICS SOCIETY. (IECON). PHILADELPHIA, NOV. 6 - 10, 1989; [PROCEEDINGS OF THE ANNUAL CONFERENCE OF THE INDUSTRIAL ELECTRONICS SOCIETY. (IECON)], NEW YORK, IEEE, US, Bd. 1 OF 04, 6. November 1989 (1989-11-06) , Seiten 652-657, XP000130570, * Zusammenfassung * * sections 2 and 3 * | 1-13 | |
| A | US 4 497 029 A (KIYOKAWA MORIO [JP]) 29. Januar 1985 (1985-01-29) * Zusammenfassung * * Abbildungen 1,9 * * Spalte 8, Zeile 9 - Spalte 11, Zeile 13 * | 1-13 | |

**RECHERCHIERTE SACHGEBIETE (IPC)**

G05B

Der vorliegende Recherchenbericht wurde für alle Patentansprüche erstellt

| Recherchenort | Abschlußdatum der Recherche | Prüfer |
|---|---|---|
| Den Haag | 8. März 2016 | Hageman, Elodie |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 15 18 6094

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-03-2016

| Im Recherchenbericht angeführtes Patentdokument | Datum der Veröffentlichung | Mitglied(er) der Patentfamilie | | Datum der Veröffentlichung |
|---|---|---|---|---|
| US 4723219 A | 02-02-1988 | CA | 1257365 A | 11-07-1989 |
| | | DE | 3620608 A1 | 02-01-1987 |
| | | FR | 2583671 A1 | 26-12-1986 |
| | | GB | 2176911 A | 07-01-1987 |
| | | IT | 1203808 B | 23-02-1989 |
| | | JP | S6254649 A | 10-03-1987 |
| | | US | 4723219 A | 02-02-1988 |
| JP S61178155 A | 09-08-1986 | KEINE | | |
| US 4497029 A | 29-01-1985 | DE | 3213917 A1 | 18-11-1982 |
| | | JP | H0418322 B2 | 27-03-1992 |
| | | JP | S57172411 A | 23-10-1982 |
| | | US | 4497029 A | 29-01-1985 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2103378 A1